# FASCICULE DE BREVET EUROPEEN

(11) **EP 3 681 756 B1**
(45) Date de publication et mention de la délivrance du brevet: **15.11.2023**
(21) Numéro de dépôt: 18782781.1
(22) Date de dépôt: 12.09.2018
(51) Int. Cl.: B60L 53/30, H02M 3/155, H02J 7/02

(54) **CHARGEUR DE VEHICULE COMPRENANT UN CONVERTISSEUR DC/DC**
FAHRZEUGLADER MIT EINEM GLEICHSTROMWANDLER
VEHICLE CHARGER COMPRISING A DC-TO-DC CONVERTER

(30) Priorité: 12.09.2017 FR 1758460
(43) Date de publication de la demande: 22.07.2020
(73) Titulaire: Valeo Systèmes de Contrôle Moteur, 95892 Cergy - Pontoise (FR)
(72) Inventeur: BAUDESSON, Philippe, 95892 Cergy Pontoise (FR)
(74) Mandataire: Valeo Powertrain Systems
(86) Numéro de dépôt international: PCT/FR2018/052231
(87) Numéro de publication internationale: WO 2019/053369

(56) Documents cités:
- EP-A1- 2 431 213
- EP-A2- 2 687 397
- KR-A- 20110 073 634

## Description

La présente invention concerne la charge électrique de véhicules automobiles électriques ou hybrides.

L'invention se rapporte en particulier à un chargeur de batterie embarqué sur un véhicule automobile électrique ou hybride, configuré pour réaliser une fonction supplémentaire de convertisseur de tension DC/DC.

De manière connue, les véhicules automobiles sont équipés d'un convertisseur de tension DC/DC configuré pour convertir une tension d'entrée, par exemple de 48 V, en une première tension de sortie par exemple en 12 V. Le convertisseur de tension DC/DC est par exemple utilisé pour alimenter une batterie par exemple de 12V à charger ou encore pour alimenter un équipement électrique, tel qu'un autoradio.

Par ailleurs, les véhicules automobiles sont, également de manière connue, équipés d'un chargeur de batterie à bord (en anglais « On Board Charger » ou OBC) permettant de charger la batterie du véhicule qui peut être par exemple une batterie de 48 V.

Dans les véhicules automobiles connus, les fonctions de convertisseur de tension DC/DC et de chargeur à bord (OBC) sont effectuées par deux modules électroniques distincts.

Il existe un besoin pour améliorer encore les véhicules automobiles hybrides ou électriques, et pour minimiser le coût et l'encombrement des chargeurs et systèmes électroniques embarqués.

L'invention vise à répondre à ce besoin, et a ainsi pour objet, selon l'un de ses aspects, un chargeur de batterie embarqué sur un véhicule selon la revendication 1.

Dans un mode particulier de réalisation de l'invention, la deuxième tension est une tension continue.

Dans un mode particulier de réalisation de l'invention, la première tension est une tension continue.

Dans un mode particulier de réalisation de l'invention, la première et la deuxième tension sont des tensions continues.

Grâce à l'invention, on combine des fonctions électroniques qui étaient de manière connue effectuées par des composants distincts, ce qui permet de réduire l'encombrement total ainsi que les coûts de production.

En outre, le refroidissement et le circuit de contrôle des transistors peuvent être mutualisés, de sorte que l'encombrement total ainsi que les coûts de production peuvent en être encore améliorés.

Le convertisseur de tension principal comporte un ou plusieurs ponts amont, notamment un ou jusqu'à autant que de transformateurs. Un même pont amont peut alimenter un ou plusieurs transformateurs.

En outre, le convertisseur de tension principal comporte un ou plusieurs ponts aval, en particulier autant que de transformateurs.

La présence d'un ou plusieurs transformateurs est utile dans la mesure où le chargeur comporte un convertisseur de tension principale isolé.

Le pont amont de transistors peut comporter au moins une branche de transistors

Dans l'invention, on comprend qu'on utilise un pont du chargeur pour réaliser une fonction de convertisseur de tension DC/DC. On utilise le pont aval du convertisseur pour délivrer lorsque l'interrupteur d'isolement est ouvert la première tension (fonction chargeur), et lorsque l'interrupteur d'isolement est fermé on utilise au moins une branche du pont aval pour générer, en commandant tout ou partie des transistors du pont aval alimenté par ladite batterie, une deuxième tension différente de la première tension (fonction convertisseur).

Une telle configuration est rendue possible par le fait qu'en général, les fonctions de chargeur et de convertisseur ne sont pas utilisées au même moment. La fonction de chargeur est utilisée lorsque le véhicule est à l'arrêt, et la fonction de convertisseur lorsque le véhicule est en roulage.

Les deux fonctions de chargeur et de convertisseur peuvent être utilisées simultanément dans le cas où le chargeur conforme à l'invention comporte plusieurs bras identiques et parallèles. Dans ce cas, au moins un bras peut être attribué à chacune des fonctions de chargeur et de convertisseur.

La deuxième tension peut permettre d'alimenter le réseau de bord du véhicule automobile, par exemple pour permettre la charge d'un téléphone mobile à bord.

Les première et deuxième tensions de sortie sont avantageusement reliées à une masse commune.

La première tension de sortie peut être inférieure à 60 V, mieux inférieure ou égale à 48 V. Dans un mode de réalisation, la première tension de sortie est de 48 V.

La deuxième tension de sortie peut être inférieure à 60 V, mieux inférieure ou égale à 48 V. Dans un mode de réalisation, la deuxième tension de sortie est de 12 V ou 24 V.

Dans un mode de réalisation particulier de l'invention, le chargeur peut comporter en outre une capacité disposée entre une sortie de bas potentiel du pont aval et la borne de ledit au moins un interrupteur d'isolement non reliée au point milieu de la première branche du pont aval. En d'autres termes, la capacité est reliée électriquement par une de ses bornes à la sortie de bas potentiel du pont aval et par l'autre de ses bornes au point milieu de la première branche du pont aval uniquement lorsque l'interrupteur d'isolement est fermé.

Dans un mode de réalisation particulier de l'invention, ladite capacité peut être non polarisée.

Le chargeur peut comporter un ou plusieurs interrupteurs d'isolement, par exemple 1, 2, 3, 4, 5 ou 6. Un nombre élevé d'interrupteurs d'isolement peut permettre d'améliorer la puissance de l'ensemble. Dans un exemple de réalisation, on a quatre interrupteurs d'isolement disposés en parallèle, chacun relié à un point milieu de l'un des deux bras de l'un des deux ponts aval.

Le chargeur peut comporter en outre au moins un interrupteur de sécurité entre ledit au moins un interrupteur d'isolement et la sortie de la deuxième tension. Lorsque le ou les interrupteurs d'isolement sont ouverts, le ou les interrupteurs de sécurité peuvent être ouverts.

Le chargeur peut comporter un ou plusieurs interrupteurs de sécurité, étant par exemple de 1, 2, 3, 4, 5 ou 6. Un nombre élevé d'interrupteurs de sécurité peut permettre d'améliorer la puissance de l'ensemble. En principe, le nombre d'interrupteurs d'isolement et de sécurité est égal. Dans un exemple de réalisation, on a quatre interrupteurs de sécurité disposés en parallèle.

Lorsque l'interrupteur d'isolement TR est relié par l'intermédiaire d'une inductance au point milieu de la première branche du pont aval, l'inductance et la première branche du pont aval forment ainsi un convertisseur-abaisseur de tension de type « Buck ».

Dans un mode particulier de réalisation de l'invention, le convertisseur de tension principal comporte en outre au moins un interrupteur disposé entre le secondaire du transformateur et le point milieu de l'une des branches du pont aval, par exemple entre le secondaire et le point milieu de la première branche du pont aval. Ledit au moins un interrupteur peut être choisi dans la liste suivante : interrupteur simple, inverseur, transistor, thyristor ou équivalent.

Dans un mode particulier de réalisation de l'invention, le circuit de contrôle est configuré pour commander l'ouverture des transistors de chaque branche du pont amont et commander en phase les transistors des au moins deux branches dudit au moins un pont aval, afin de maintenir le courant dans le secondaire du transformateur sensiblement nul.

Dans ce mode de réalisation, les transistors du pont aval d'un même transformateur sont commandés de façon synchrone et contrôlés avec le même cycle de fonctionnement. L'un des transistors d'une branche du pont aval est ouvert, pendant que l'autre est passant, puis inversement. Les points milieu T1 et T2 des deux branches dudit pont aval sont au même potentiel. En outre, les transistors du pont amont sont ouverts. Il n'y a pas de courant dans le secondaire du transformateur. On obtient un courant en sortie du convertisseur avec de plus grandes oscillations.

Dans ce mode de réalisation, il n'est pas nécessaire d'ajouter un interrupteur K1 entre le secondaire du transformateur et le point milieu T1 de l'une des branches du pont aval, et le convertisseur de tension principal peut être dépourvu d'un tel interrupteur K1.

L'invention a encore pour objet, indépendamment ou en combinaison avec ce qui précède, un véhicule automobile équipé d'un chargeur tel que décrit ci-dessus. Le véhicule automobile peut être tout électrique ou hybride.

L'invention a encore pour objet un procédé de charge d'une batterie de véhicule automobile utilisant le chargeur selon l'invention. Selon un tel procédé, on ferme sélectivement l'interrupteur d'isolement relié directement ou par l'intermédiaire d'une inductance à un point milieu d'une première branche du pont aval du chargeur, pour utiliser au moins ladite première branche du pont aval et générer, en commandant tout ou partie des transistors du pont aval alimenté par ladite batterie, une deuxième tension différente de la première tension.

Le procédé peut comporter tout ou partie des caractéristiques de l'invention exposées ci-dessus.

### Description détaillée

L'invention pourra être mieux comprise à la lecture de la description détaillée qui va suivre, d'exemples de mise en oeuvre non limitatifs de celle-ci, et à l'examen du dessin annexé, sur lequel :
- la figure 1 illustre un circuit électrique connu de convertisseur DC/DC,
- les figures 2a à 2c illustrent des variantes connues de réalisation de circuits électriques de chargeurs à bord (OBC), et
- les figures 3 à 4 illustrent des variantes de réalisation de circuits électriques de chargeurs conformes à l'invention.

### Convertisseur de tension principal DC/DC

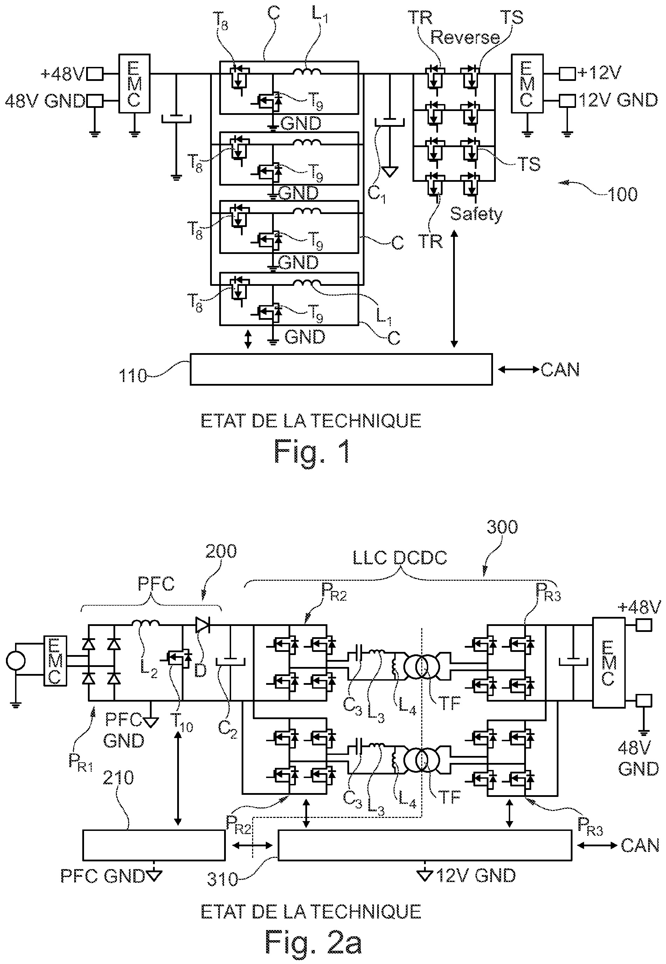

On a illustré à la figure 1 un convertisseur de tension principale 100 DC/DC configuré pour convertir une première tension d'entrée, par exemple de 48 V, en une deuxième tension de sortie, par exemple en 12 V.

Le convertisseur de tension principal 100 comporte un pont fonctionnant en hacheur, de manière connue en soi. Un tel convertisseur est dit hacheur abaisseur (« *buck* » en anglais), et convertit une tension continue en une autre tension continue de plus faible valeur. Dans un exemple de réalisation, il peut s'agir par exemple de convertir une tension de 48 V en une tension de 12 V.

Dans l'exemple de réalisation de la figure 1, le convertisseur DC/DC 100 comporte 4 cellules C disposées en parallèle. Bien entendu, le nombre de cellules C pourrait être différent sans que l'on ne sorte du cadre de la présente invention. Il peut par exemple être compris entre 2 et 12, étant par exemple de 2, 3, 4, 5 ou 6.

L'utilisation de plusieurs cellules peut permettre de réduire les contraintes sur les semi-conducteurs. On parle alors de *hacheurs entrelacés* car les cellules du convertisseur conduisent toutes vers un même condensateur de sortie C1 avec un déphasage de T/4 entre les commandes des transistors de chaque cellule successive où T est la période du cycle de fonctionnement du convertisseur. En d'autres termes, le rapport cyclique au sein de chacune des cellules est identique mais les commandes des transistors sont déphasées de T/4 d'une cellule à l'autre.

Dans l'exemple décrit ici, ce condensateur de sortie C2 est non polarisé.

Chaque cellule C comporte un premier transistor T8, un deuxième transistor T9, et une inductance L1.

Dans l'exemple décrit ici, les transistors T1 et T2 sont des MOSFETs.

Le fonctionnement d'un tel convertisseur 100 peut être divisé en deux configurations suivant l'état du transistor T8.

Dans l'état passant, le transistor T8 est fermé, le courant traversant l'inductance L1 augmente linéairement. La tension aux bornes du deuxième transistor T9 étant négative, aucun courant ne le traverse.

Dans l'état bloqué, le transistor T8 est ouvert. Le deuxième transistor T9 devient passant afin d'assurer la continuité du courant dans l'inductance L1. Le courant traversant l'inductance L1 décroît.

Par ailleurs, le convertisseur 100 comporte des interrupteurs d'isolement TR (en anglais « *reverse* »), reliés directement à la sortie de la ou des cellules C, permettant lorsque fermé de délivrer la tension de sortie, et lorsqu'ouvert de protéger la ou les cellules C.

Le convertisseur 100 comporte également des interrupteurs de sécurité TS (en anglais « *safety* »), lesquels sont montés chacun en série avec un interrupteur d'isolement TR correspondant. Ces interrupteurs de sécurité TS permettent lorsque fermé de délivrer la tension de sortie, et lorsqu'ouvert de protéger la ou les cellules C.

Une telle configuration permet d'éviter le passage du courant dans les deux sens. Les interrupteurs d'isolement et de sécurité sont activés (comme interrupteur ouvert) si une sous-tension ou une surtension, c'est-à-dire des perturbations, apparaissent sur un des réseaux en entrée ou en sortie, ainsi que dans le cas d'un dysfonctionnement matériel du convertisseur DC/DC, par exemple la défaillance d'un transistor.

Chaque paire d'interrupteurs d'isolement et de sécurité est montée en parallèle avec les autres.

Dans l'exemple décrit, le convertisseur comporte 4 paires d'interrupteurs d'isolement et de sécurité, ce qui permet d'améliorer la puissance de l'ensemble, mais on ne sort pas du cadre de la présente invention si leur nombre est différent, étant par exemple de 1, 2, 3, 5 ou 6. En principe, le nombre de paires d'interrupteurs d'isolement et de sécurité est égal au nombre de cellule du convertisseur.

Dans l'exemple décrit, les interrupteurs d'isolement et de sécurité sont des transistors, par exemple du type MOSFET.

Tous les transistors et interrupteurs du convertisseur 100 sont contrôlés par un contrôleur 110 du convertisseur 100.

### Chargeur de batterie (OBC)

Un chargeur de batterie à bord (OBC) permet de charger la batterie du véhicule en fournissant une deuxième tension de sortie, qui peut être par exemple de 48 V.

Un chargeur de batterie connu de l'art antérieur peut comporter, comme illustré dans les exemples de réalisation des figures 2a à 2c, deux étages, à savoir un premier étage formé d'un convertisseur correcteur de facteur de puissance (PFC) 200, et un second étage formé d'un convertisseur LLC DC/DC 300.

### Convertisseur correcteur de facteur de puissance (PFC)

En ce qui concerne le premier étage, le convertisseur correcteur de facteur de puissance PFC 200, dans sa fonction de correction du facteur de puissance, a pour fonction principale de prélever un courant sinusoïdal et en phase avec la tension sur le réseau avec un taux de distorsion en courant inférieur à 5%, en d'autres termes le PFC ne prélève que de la puissance active sur le réseau, en l'espèce principalement le réseau électrique 220V monophasé.

Le convertisseur correcteur de facteur de puissance PFC 200 comporte, dans le mode de réalisation de la figure 2a, un convertisseur AC/DC, à savoir un pont redresseur P_{R1} et un convertisseur-élévateur de type boost comprenant un transistor T10, une diode D et une inductance L2. En outre, une capacité C2 de filtrage est placé en aval du convertisseur correcteur de facteur de puissance PFC 200 et en amont du LLC DCDC 300 ou du DC/DC dual bridge.

Tous les transistors, interrupteurs pouvant être ouvert (interrupteur bloqué) ou fermé (interrupteur passant), du convertisseur 200 sont contrôlés par un contrôleur 210 du convertisseur 200.

### Convertisseur LLC DC/DC

En ce qui concerne le second étage, il s'agit d'un convertisseur LLC DC/DC 300, c'est-à-dire un convertisseur comportant au moins un pont redresseur P_{R2}, suivi d'un circuit résonant avec deux inductances L3 et L4 et une capacité C3, et d'un transformateur TF comportant un primaire et un secondaire, puis d'un pont redresseur P_{R3}.

Dans l'exemple décrit à la figure 2a, le convertisseur LLC DC/DC 300 comporte deux branches identiques et parallèles, donc deux ponts redresseurs P_{R2}, chacun suivi d'un circuit résonant avec deux inductances L3 et L4 et une capacité C3, et d'un transformateur TF comportant un primaire et un secondaire, puis d'un pont redresseur P_{R3}. Il y a donc deux transformateurs TF, puis deux ponts redresseurs P_{R3}.

Un tel mode de réalisation permet un fonctionnement à une puissance par exemple de 7kW ou 3,5kW.

Dans l'exemple décrit, les ponts redresseurs comportent des transistors. Tous les transistors (interrupteurs) du convertisseur 300 sont contrôlés par un contrôleur 310 du convertisseur 300.

Dans l'exemple de la figure 2a, le chargeur de batterie OBC n'est pas réversible.

D'autres configurations de chargeur de batterie sont possibles, en fonction de la puissance recherchée.

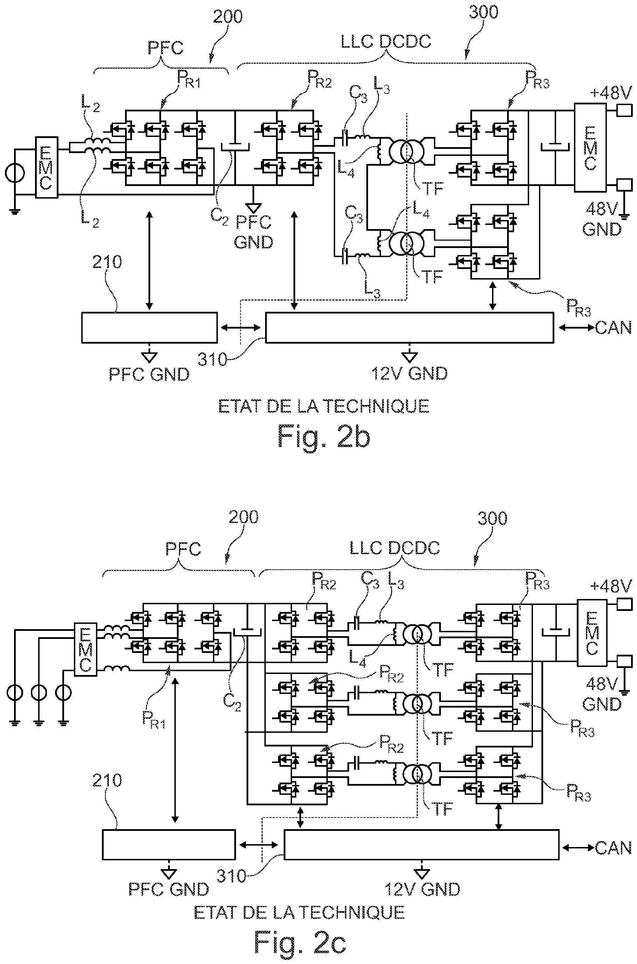

Dans la variante de réalisation illustrée à la figure 2b, le chargeur de batterie est réversible. A cet effet, il diffère de celui illustré à la figure 2a par la forme du pont redresseur PR1 (appelé en anglais « active front end rectifier »), lequel comporte des transistors formant deux premiers bras ainsi que deux inductances L2 reliées chacune au point milieu d'un des deux premier bras du pont redresseur PR1.

Enfin, et de manière optionnelle, le convertisseur correcteur de facteur de puissance PFC 200 comporte un troisième bras de transistors pour l'amélioration de la compatibilité électromagnétique (en anglais « EMC »).

Ce mode de réalisation diffère également du précédent par le fait que le convertisseur LLC DC/DC 300 comporte un seul pont redresseur P_{R2} en amont des deux transformateurs TF, ce qui permet de réduire le nombre de composants électroniques et donc le coût et l'encombrement.

Dans le mode de réalisation de la figure 2c, le chargeur de batterie est également réversible et le convertisseur LLC DC/DC 300 comporte trois branches identiques, donc trois ponts redresseurs P_{R2}, chacun suivi d'un circuit résonant avec deux inductances L3 et L4 et une capacité C3, et d'un transformateur TF comportant un primaire et un secondaire, puis d'un pont redresseur P_{R3}. Il y a donc trois transformateurs TF, puis trois ponts redresseurs P_{R3}.

Un tel mode de réalisation permet un fonctionnement à une puissance plus élevée, par exemple de 7kW ou 11kW.

Enfin, le convertisseur correcteur de facteur de puissance PFC 200 peut être triphasé plutôt que monophasé, comme dans les exemples des figures 2a et 2b.

### Chargeur de batterie (OBC) avec convertisseur dual bridge DC/DC

On connaît par ailleurs des chargeurs de batterie dans lequel le convertisseur LLC DC/DC des exemples précédents peut être remplacé par un convertisseur dual bridge DC/DC. Un tel convertisseur dual bridge DC/DC comporte un premier pont primaire PR1, un deuxième pont secondaire PR2 et un transformateur entre les deux ponts. En d'autres termes le convertisseur dual bridge DC/DC ne comprend pas d'étage résonnant (pas d'inductance L3 ni de capacité C3). Le premier étage d'un chargeur de batterie utilisant un convertisseur dual-bridge DC/DC est connu de l'homme du métier et n'est pas décrit ici.

### Chargeur de batterie avec convertisseur intégré

On va maintenant décrire un chargeur de batterie embarqué conforme à l'invention.

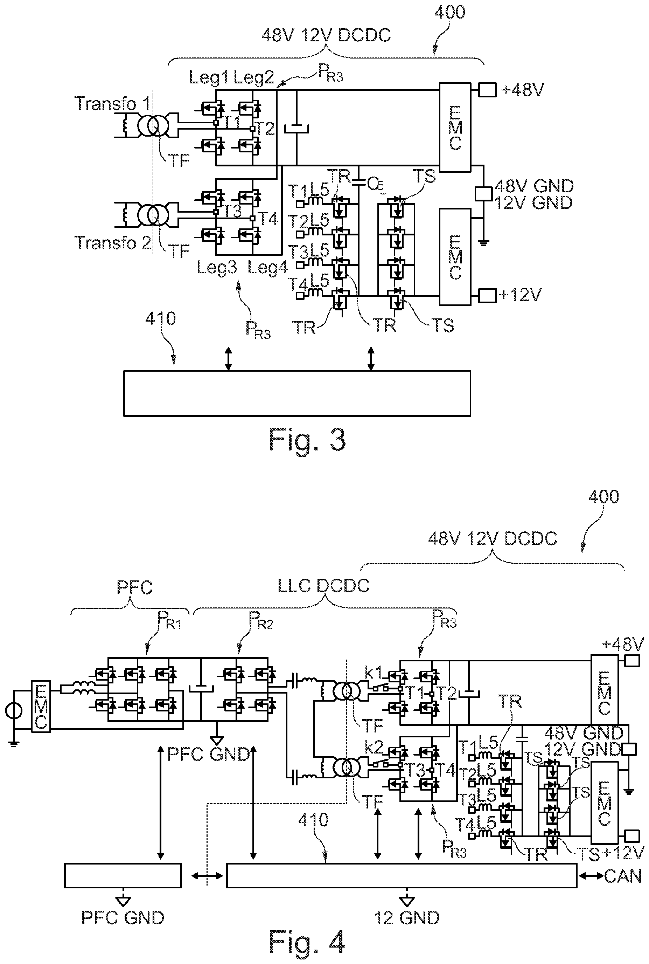

On a illustré à la figure 3 un chargeur de batterie embarqué sur un véhicule, comportant un convertisseur de tension principal comportant :
- au moins un transformateur TF comportant au moins un primaire et au moins un secondaire, et notamment dans l'exemple décrit deux transformateurs TF,
- au moins un pont amont de transistors commandés alimentant le primaire du transformateur, non représenté sur la figure 3. Cette partie amont peut par exemple être analogue à ce qui a été décrit en référence aux figures 2a à 2b, et
- au moins un pont aval PR3 de transistors commandés alimentés par le secondaire du transformateur, permettant lorsque commandés en courant et/ou en tension de générer une première tension pour alimenter une batterie à charger, le pont aval comportant au moins deux branches. Dans l'exemple décrit, on a deux ponts aval PR3 identiques, chaque pont aval PR3 est un pont en H comportant deux branches (Leg1 et Leg2 ; Leg3 et Leg4) et la batterie à charger est une batterie 48V.

Par ailleurs, le chargeur comporte au moins un interrupteur d'isolement TR (en anglais « *reverse* ») relié par l'intermédiaire d'une inductance L5 à un point milieu d'une première branche Leg1 du pont aval PR3, permettant lorsqu'ouvert d'utiliser le pont aval PR3 pour délivrer la première tension, et lorsque fermé d'utiliser au moins une branche, à savoir la première branche Leg1, du pont aval pour générer, en commandant tout ou partie des transistors du pont aval alimenté par ladite batterie, une deuxième tension différente de la première tension. Dans l'exemple décrit, on a quatre interrupteurs d'isolement TR, et quatre inductances L5 reliées aux points T1, T2, T3 et T4 des quatres branches Leg1, Leg2, Leg3 et Leg 4 des deux ponts aval PR3.

Le chargeur comporte en outre une capacité C5 disposée entre la sortie de bas potentiel du pont aval et les interrupteurs d'isolement TR. Dans l'exemple décrit ici, la capacité C5 est non polarisée.

Le chargeur comporte en outre quatre interrupteurs de sécurité TS en parallèle. Ces quatre interrupteurs de sécurité TS sont disposés entre la sortie non réliée à l'inductance L5 des transistors d'isolement TR et la sortie de la deuxième tension.

Le chargeur comporte également un circuit de contrôle 410 des transistors et des interrupteurs.

Les interrupteurs d'isolement TR sont ouverts lorsque le chargeur remplit sa fonction de chargeur de batterie embarqué OBC en fournissant la première tension de charge de la batterie du véhicule. Ainsi, les bras des ponts aval PR3 sont utilisés pour réaliser un convertisseur LLC DCDC. Les transistors des ponts aval PR3 sont commandés comme cela a été décrit précédemment en relation avec les figures 2a à 2b . Lorsque le chargeur remplit une fonction de convertisseur de tension, pour fournir la deuxième tension, les interrupteurs d'isolement TR sont fermés. Dans cette configuration, chacun des bras des ponts aval PR3 forment avec une inductance L5 une cellule C, dite convertisseur-abaisseur de type « buck », d'un convertisseur DC/DC.

Dans ce contexte, les interrupteurs d'isolement TR et les interrupteurs de sécurité TS sont également ouvert si une sous-tension ou une sur-tension (perturbations) apparaît sur un des réseaux en entrée ou en sortie du convertisseur DC/DC, ainsi que dans le cas d'un dysfonctionnement matériel du DC/DC (casse d'un interrupteur par exemple).

Dans l'exemple décrit, les interrupteurs d'isolement et de sécurité sont des transistors, par exemple des transistors MOSFET. Ces interrupteurs d'isolement et de sécurité sont également contrôlés par le circuit de contrôle 410. En d'autres termes, les transistors sont utilisés comme interrupteur électronique pouvant être ouvert (transistor bloqué) ou fermé (transistor passant).

De façon avantageuse, on a ainsi un seul contrôleur pour contrôler sélectivement le convertisseur LLC DC/DC et le convertisseur de tension DC/DC.

Dans ce mode de réalisation, lorsque les interrupteurs d'isolement sont fermés, chacune des cellules C appartenant à un même pont aval PR3 de transistors commandés alimentés par le secondaire d'un même transformateur sont contrôlés (par le circuit de contrôle 410) de sorte que chacune desdites cellules C fonctionne avec le même cycle de travail (en anglais « duty cycle ») et sans décalage de phase. De cette façon, les bras Leg1 et Leg 2 fonctionnent avec le même cycle de travail et sans décalage de phase. En d'autres termes, le rapport cyclique est identique et les commandes des transistors ne sont pas déphasées d'un bras à l'autre. Le circuit de contrôle 410 commande de même les bras Leg3 et Leg4. En outre, le circuit de contrôle 410 commande l'ouverture de chaque branche du ou des ponts amonts. En conséquence, le courant dans le secondaire des transformateurs TR est sensiblement nul et les points T1 et T2 sont au même potentiel. Il en est de même pour les points T3 et T4. Par ailleurs, les commandes des interrupteurs des cellules contenant les bras Leg1 et Leg2 sont en déphasage de T/2 par rapport aux cellules contenant les bras Leg3 et Leg4.

On a illustré à la figure 4 une variante de réalisation de l'invention, dans laquelle le convertisseur de tension principal 400 comporte en outre un interrupteur K1 et un interrupteur K2, chacun disposé entre le secondaire du transformateur TF et le point milieu respectivement T1, T3 de l'une des branches de chacun des deux ponts aval PR3.

Lorsque les interrupteurs K1 et K2 sont fermés, les interrupteurs d'isolement TR sont ouverts, et le chargeur remplit sa fonction de chargeur en fournissant la première tension de charge de la batterie du véhicule.

Lorsque les interrupteurs K1 et K2 sont ouverts, les interrupteurs d'isolement TR sont fermés, et le chargeur remplit sa fonction de convertisseur de tension, pour fournir la deuxième tension. Chaque pont aval est commandé comme décrit en lien avec la figure 1, avec un même rapport cyclique et avec un déphasage de T/4 (dans cet exemple) entre les commandes d'ouverture et de fermeture des transistors des différentes branches.

Il est à noter que la capacité C5 peut être deux fois plus petite dans cette variante de réalisation que dans la variante de réalisation représentée à la figure 3, puisque le courant en sortie du convertisseur présente des oscillations de moindre amplitude.

Bien entendu, le chargeur pourrait ne comporter qu'un seul pont aval et un seul interrupteur K1, avec deux interrupteurs d'isolement reliés respectivement aux points T1 et T2, et deux interrupteurs de sécurité. Dans ce cas, il y a un déphasage de T/2 entre les deux branches du pont aval.

Dans l'exemple décrit, les interrupteurs d'isolement et de sécurité sont des transistors, par exemple des transistors MOSFET. Tous les transistors et interrupteurs sont contrôlés par un contrôleur 410.

Bien entendu, l'invention n'est pas limitée aux exemples qui viennent d'être décrits. En particulier, les nombres de branches des ponts peuvent être différents. En outre, le nombre de bras du chargeur et le nombre de transformateurs peuvent être différents. Il peut être de 1, de 2, de 3 ou de 4, par exemple. Enfin, l'invention s'applique également au chargeur utilisant un convertisseur dual-bridge DC/DC.

## Revendications

1. Chargeur de batterie (400) embarqué sur un véhicule, comportant :
- un convertisseur de tension principal comportant :
- au moins un transformateur (TF) comportant au moins un primaire et au moins un secondaire,
- au moins un pont amont (PR2) de transistors commandés alimentant le primaire du transformateur (TF),
- au moins un pont aval (PR3) de transistors commandés alimentés par le secondaire du transformateur, permettant lorsque commandés en courant et/ou en tension de générer une première tension pour alimenter une batterie à charger, le pont aval comportant au moins deux branches (Leg1, Leg2),
- au moins un interrupteur d'isolement (TR) relié par l'intermédiaire d'une inductance (L5) à un point milieu (T1) d'une première branche (Leg1) du pont aval, permettant lorsqu'ouvert d'utiliser le pont aval pour délivrer la première tension, et
- un circuit de contrôle des transistors (410),
**caractérisé en ce que** le chargeur de batterie comporte en outre une capacité (C5) disposée entre une sortie de bas potentiel du pont aval (PR3) et ledit au moins un interrupteur d'isolement (TR) et **en ce que** lorsque l'interrupteur d'isolement (TR) est fermé d'utiliser au moins ladite première branche du pont aval pour générer, en commandant tout ou partie des transistors du pont aval alimenté par ladite batterie, une deuxième tension différente de la première tension.

2. Chargeur selon la revendication précédente dans lequel la deuxième tension est une tension continue.

3. Chargeur selon l'une des revendications précédentes, dans lequel ladite capacité (C5) est non polarisée.

4. Chargeur selon l'une quelconque des revendications précédentes, comportant en outre au moins un interrupteur de sécurité (TS) entre ledit au moins un interrupteur d'isolement (TR) et la sortie de la deuxième tension.

5. Chargeur selon l'une des revendications précédentes, dans lequel le convertisseur de tension principal comporte en outre au moins un interrupteur (K1) disposé entre le secondaire du transformateur (TF) et le point milieu (T1;T3) de l'une des branches du pont aval.

6. Chargeur selon l'une des revendication 1 à 4, le circuit de contrôle étant configuré pour commander l'ouverture des transistors de chaque branche du pont amont (PR2) et commander en phase les transistors des au moins deux branches (Leg1, Leg2) dudit au moins un pont aval (PR3), afin de maintenir le courant dans le secondaire du transformateur (TF) sensiblement nul.

7. Procédé de charge d'une batterie utilisant un chargeur selon l'une quelconque des revendications précédentes, dans lequel on ferme sélectivement l'interrupteur d'isolement (TR) relié par l'intermédiaire de l'inductance (L5) à un point milieu (T1) de la première branche (Leg1) du pont aval du chargeur, pour utiliser au moins ladite première branche du pont aval et générer, en commandant tout ou partie des transistors du pont aval alimenté par ladite batterie, la deuxième tension différente de la première tension.

8. Véhicule automobile équipé d'un chargeur selon l'une quelconque des revendications 1 à 6.

## Patentansprüche

1. Batterieladegerät (400) an Bord eines Fahrzeugs, aufweisend:
- einen Hauptspannungswandler, der Folgendes aufweist:
▪ wenigstens einen Transformator (TF) mit wenigstens einer Primärwicklung und wenigstens einer Sekundärwicklung,
▪ wenigstens eine stromaufwärtige Brücke (PR2) aus gesteuerten Transistoren, die die Primärwicklung des Transformators (TF) speisen,
▪ wenigstens eine stromabwärtige Brücke (PR3) aus gesteuerten Transistoren, die von der Sekundärwicklung des Transformators gespeist werden, die es ermöglichen, wenn sie strom- und/oder spannungsgesteuert sind, eine erste Spannung zu erzeugen, um eine zu ladende Batterie zu speisen, wobei die stromabwärtige Brücke wenigstens zwei Zweige (Leg1, Leg2) aufweist,
- wenigstens einen Trennschalter (TR), der mittels einer Induktivität (L5) an einen Mittelpunkt (T1) eines ersten Zweigs (Leg1) der stromabwärtigen Brücke angeschlossen ist, der es ermöglicht, wenn er offen ist, die stromabwärtige Brücke zu verwenden, um die erste Spannung abzugeben, und
- einen Steuerschaltkreis der Transistoren (410),
**dadurch gekennzeichnet, dass** das Batterieladegerät ferner eine Kapazität (C5) aufweist, die zwischen einem Niederpotentialausgang der stromabwärtigen Brücke (PR3) und dem wenigstens einen Trennschalter (TR) angeordnet ist, und dadurch, dass, wenn der Trennschalter (TR) geschlossen ist, wenigstens den ersten Zweig der stromabwärtigen Brücke dafür zu verwenden, durch Steuerung aller oder einiger der Transistoren der stromabwärtigen Brücke, die von der Batterie gespeist wird, eine zweite Spannung zu erzeugen, die sich von der ersten Spannung unterscheidet.

2. Ladegerät nach dem vorhergehenden Anspruch, wobei die zweite Spannung eine Gleichspannung ist.

3. Ladegerät nach einem der vorhergehenden Ansprüche, wobei die Kapazität (C5) nicht polarisiert ist.

4. Ladegerät nach einem der vorhergehenden Ansprüche, ferner aufweisend wenigstens einen Sicherheitsschalter (TS) zwischen dem wenigstens einen Trennschalter (TR) und dem Ausgang der zweiten Spannung.

5. Ladegerät nach einem der vorhergehenden Ansprüche, wobei der Hauptspannungswandler ferner wenigstens einen Schalter (K1) aufweist, der zwischen der Sekundärwicklung des Transformators (TF) und dem Mittelpunkt (T1; T3) eines der Zweige der stromabwärtigen Brücke angeordnet ist.

6. Ladegerät nach einem der Ansprüche 1 bis 4, wobei der Steuerschaltkreis dazu ausgebildet ist, das Öffnen der Transistoren jedes Zweigs der stromaufwärtigen Brücke (PR2) zu steuern und die Transistoren der wenigstens zwei Zweige (Leg1, Leg2) der wenigstens einen stromabwärtigen Brücke (PR3) phasenzusteuern, um den Strom in der Sekundärwicklung des Transformators (TF) im Wesentlichen auf Null zu halten.

7. Ladeverfahren einer Batterie mithilfe eines Ladegeräts nach einem der vorhergehenden Ansprüche, wobei der Trennschalter (TR), der mittels der Induktivität (L5) an einen Mittelpunkt (T1) des ersten Zweigs (Leg1) der stromabwärtigen Brücke des Ladegeräts angeschlossen ist, selektiv geschlossen wird, um wenigstens den ersten Zweig der stromabwärtigen Brücke zu verwenden und durch Steuerung aller oder einiger der Transistoren der stromabwärtigen Brücke, die von der Batterie gespeist wird, die zweite Spannung zu erzeugen, die sich von der ersten Spannung unterscheidet.

8. Kraftfahrzeug, das mit einem Ladegerät nach einem der Ansprüche 1 bis 6 ausgerüstet ist.

## Claims

1. Battery charger (400) located on board a vehicle, comprising:
- a main voltage converter comprising:
- at least one transformer (TF) comprising at least one primary and at least one secondary,
- at least one upstream bridge (PR2) of driven transistors supplying the primary of the transformer (TF),
- at least one downstream bridge (PR3) of driven transistors supplied by the secondary of the transformer, making it possible when driven in terms of current and/or voltage to generate a first voltage so as to supply a battery to be charged, the downstream bridge comprising at least two branches (Legl, Leg2),
- at least one isolation switch (TR) linked by way of an inductor (L5) to a midpoint (Tl) of a first branch (Legl) of the downstream bridge, making it possible when open to use the downstream bridge to deliver the first voltage, and
- a control circuit for the transistors (410),
**characterized in that** the battery charger furthermore comprises a capacitor (C5) disposed between an output of low potential of the downstream bridge (PR3) and said at least one isolation switch (TR) and **in that**, when the isolation switch (TR) is closed, at least said first branch of the downstream bridge is used to generate, by driving all or some of the transistors of the downstream bridge supplied by said battery, a second voltage different from the first voltage.

2. Charger according to the preceding claim, in which the second voltage is a DC voltage.

3. Charger according to one of the preceding claims, in which said capacitor (C5) is not polarized.

4. Charger according to any one of the preceding claims, furthermore comprising at least one safety switch (TS) between said at least one isolation switch (TR) and the output of the second voltage.

5. Charger according to one of the preceding claims, in which the main voltage converter furthermore comprises at least one switch (Kl) disposed between the secondary of the transformer (TF) and the midpoint (T1;T3) of one of the branches of the downstream bridge.

6. Charger according to one of Claims 1 to 4, the control circuit being configured to drive the opening of the transistors of each branch of the upstream bridge (PR2) and to drive in phase the transistors of the at least two branches (Legl, Leg2) of said at least one downstream bridge (PR3), so as to maintain the current in the secondary of the transformer (TF) substantially zero.

7. Method of charging a battery using a charger according to any one of the preceding claims, in which the isolation switch (TR) linked by way of the inductor (L5) to a midpoint (Tl) of the first branch (Legl) of the downstream bridge of the charger is closed selectively so as to use at least said first branch of the downstream bridge and to generate, by driving all or some of the transistors of the downstream bridge supplied by said battery, the second voltage different from the first voltage.

8. Motor vehicle equipped with a charger according to any one of Claims 1 to 6.
